(19) **Europäisches Patentamt / European Patent Office / Office européen des brevets**

(11) **EP 3 962 288 B1**

(12) **FASCICULE DE BREVET EUROPEEN**

(45) Date de publication et mention de la délivrance du brevet:
**28.01.2026 Bulletin 2026/05**

(21) Numéro de dépôt: **20731536.7**

(22) Date de dépôt: **29.04.2020**

(51) Classification Internationale des Brevets (IPC):
**A23J 1/14** *(2006.01)*     **A23J 3/14** *(2006.01)*
**A23L 13/40** *(2023.01)*

(52) Classification Coopérative des Brevets (CPC):
**A23J 3/14; A23J 1/14; A23L 13/426**

(86) Numéro de dépôt international:
**PCT/FR2020/050726**

(87) Numéro de publication internationale:
**WO 2020/221978 (05.11.2020 Gazette 2020/45)**

(54) **PROTEINE DE LEGUMINEUSE GELIFIANTE**

GELIERENDES LEGUMINOSEPROTEIN

GELLING LEGUMINOUS PROTEIN

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **29.04.2019 FR 1904521**

(43) Date de publication de la demande:
**09.03.2022 Bulletin 2022/10**

(73) Titulaire: **ROQUETTE FRERES**
**62136 Lestrem (FR)**

(72) Inventeurs:
• **LAROCHE, Christophe**
**35300 FOUGERES (FR)**
• **CALMON, Lucile**
**59800 LILLE (FR)**

(74) Mandataire: **Plasseraud IP**
**104 Rue de Richelieu**
**CS92104**
**75080 Paris Cedex 02 (FR)**

(56) Documents cités:
WO-A1-00/37485    WO-A1-2011/124862
FR-A1- 2 889 416    JP-A- S55 131 351
US-A- 4 060 203

• A. FERN�NDEZ-QUINTELA ET AL: "Composition and functional properties of protein isolates obtained from commercial legumes grown in northern Spain", PLANT FOODS FOR HUMAN NUTRITION, vol. 51, no. 4, 1 January 1997 (1997-01-01), pages 331 - 341, XP055076339, ISSN: 0921-9668, DOI: 10.1023/A:1007936930354

• LIU BOHUI ET AL: "Ball-milling changed the physicochemical properties of SPI and its cold-set gels", JOURNAL OF FOOD ENGINEERING, BARKING, ESSEX, GB, vol. 195, 4 October 2016 (2016-10-04), pages 158 - 165, XP029805485, ISSN: 0260-8774, DOI: 10.1016/J.JFOODENG.2016.10.006

• ISAO HAYAKAWA ET AL: "Microparticulation by Jet Mill Grinding of Protein Powders and Effects on Hydrophobicity", JOURNAL OF FOOD SCIENCE, vol. 58, no. 5, 1 September 1993 (1993-09-01), US, pages 1026 - 1029, XP055678477, ISSN: 0022-1147, DOI: 10.1111/j.1365-2621.1993.tb06104.x

• SUN CHANCHAN ET AL: "Reduction of particle size based on superfine grinding: Effects on structure, rheological and gelling properties of whey protein concentrate", JOURNAL OF FOOD ENGINEERING, vol. 186, October 2016 (2016-10-01), pages 69 - 76, XP055678355

## Description

Domaine technique

L'invention relève du domaine des protéines végétales, en particulier des isolats protéiques de légumineuse choisie parmi le pois et le lupin, encore plus particulièrement des isolats protéiques de pois.

Technique antérieure

Les besoins quotidiens humains en protéines sont compris entre 12 et 20% de la ration alimentaire. Ces protéines sont fournies aussi bien par des produits d'origine animale (viandes, poissons, œufs, produits laitiers) que par des produits d'origine végétale (céréales, légumineuses, algues).

Cependant, dans les pays industrialisés, les apports en protéines sont majoritairement sous la forme de protéines d'origine animale. Or, de nombreuses études démontrent qu'une consommation excessive de protéines d'origine animale au détriment des protéines végétales est une des causes d'augmentation de cancers et maladies cardio-vasculaires.

Par ailleurs, les protéines animales présentent beaucoup de désavantages, tant sur le plan de leur allergénicité, concernant notamment les protéines issues du lait ou des œufs, que sur le plan environnemental en relation avec les méfaits de l'élevage intensif.

Ainsi, il existe une demande croissante des industriels pour des composés d'origine végétale possédant des propriétés nutritionnelles et fonctionnelles intéressantes sans pour autant présenter les inconvénients de composés d'origine animale.

Le soja a été, et reste, la première alternative végétale aux protéines animales. L'utilisation du soja possède néanmoins des désavantages certains. La graine de soja est plus que fréquemment d'origine OGM et l'obtention de sa protéine passe par une étape de déshuilage utilisant du solvant.

Depuis les années 70, les légumineuses à graines, dont en particulier le pois, se sont fortement développé en Europe, majoritairement en France, comme ressource protéique alternative aux protéines animales à destination de l'alimentation animale et humaine. Le pois contient environ 27 % en poids de matières protéiques. Le terme « pois » est ici considéré dans son acception la plus large et inclut en particulier toutes les variétés sauvages de « pois lisse » (« smooth pea »), et toutes les variétés mutantes de « pois lisse » et de « pois ridé » (« wrinkled pea »), et ce quelles que soient les utilisations auxquelles on destine généralement lesdites variétés (alimentation humaine, nutrition animale et/ou autres utilisations). Ces graines sont non-OGM et ne nécessitent pas de déhuilage solvanté.

La protéine de pois, majoritairement de la globuline de pois, est extraite et valorisée industriellement depuis bon nombre d'années. On peut citer, comme exemple de procédé d'extraction de la protéine de pois, le brevet EP1400537. Dans ce procédé, la graine est broyée en absence d'eau (procédé dit de « broyage à sec ») afin d'obtenir une farine. Cette farine sera ensuite mise en suspension dans de l'eau afin d'en extraire la protéine. D'autres procédés d'extraction de protéines de légumineuses sont également décrits dans les documents US4060203 A, FR2889416 A1 et WO 2011/124862 A1. Le document JP55-131351 A décrit la fabrication d'un isolat de protéine de soja dans laquelle une farine, sous forme de fines particules, est mise en solution aqueuse, et une fraction protéique est précipitée en mettant ladite solution aqueuse à pH acide. La solution de protéine précipitée est ensuite neutralisée puis traitée thermiquement, et éventuellement atomisée, afin de former un isolat de protéine de soja.

Les protéines de légumineuses, et en particulier celle de pois, sont cependant nettement moins gélifiantes que celles de soja. Comme présenté dans « Accessing gelling ability of vegetable proteins using rheological and fluorescence techniques » (Bastistaa & al., International Journal of Biological Macromolecules 36 (2005) 135-143, 2005), les protéines de pois et de lupin sont présentées comme moins gélifiantes que la protéine de soja.

Il est donc d'intérêt d'obtenir une protéine de légumineuse, en particulier un isolat protéique de légumineuse, encore plus particulièrement un isolat protéique de pois dont le pouvoir gélifiant ou la force de gel est amélioré. Ces protéines de légumineuses peuvent être intégrées dans des produits alimentaires ou pharmaceutiques. Ces produits peuvent présenter des pH très variables, allant de 4 à 9. Toutefois, dans de nombreuses applications, telles que les substituts de viande ou de poisson, ces protéines sont mises en œuvre à « pH neutre », *i.e.* un pH allant d'environ 6 à environ 8. A titre d'exemple, on peut citer les substituts de viande et de poisson dans lesquels de telles protéines sont utiles pour faire adhérer, après gélification, d'autres protéines texturées entre elles. C'est ainsi qu'il est particulièrement avantageux de pouvoir fournir de nouvelles protéines de légumineuses présentant, comme propriété fonctionnelle améliorée, une force de gel supérieure à pH neutre.

Il y a déjà eu des tentatives de réduire la taille de particules d'isolats et de concentrats de protéines et d'étudier les propriétés fonctionnelles des compositions résultantes. Par exemple, le document Sun et al. (Reduction of particle size based on superfine grinding: Effects on structure, rheological and gelling properties of whey protein concentrate, Journal of Food Engineering, Vol. 186, 2016, Pages 69-76) décrit le broyage d'un concentré de protéines de lactosérum utilisant un broyeur à nano-billes. Différentes propriétés des protéines sont étudiées parmi lesquelles la taille de particules, les forces de gel à différents pH, la coloration et la structure par infra-rouge. En ce qui concerne les forces de gel, il résulte du broyage des compositions protéiques présentant, par rapport aux protéines avant broyage, des protéines aux forces de gel à pH acide (4,5) plus fortes et aux forces de gel à pH neutre (6,5) et basique (8,5) plus faibles.

Le document Hayakawa et al. (Microparticulation by Jet Mill Griding of Protein Powders and Effects on Hydrophobicity, Journal of Food Science, Vol. 58, Issue n°5, 1993, pages 1026-1029) décrit quant à lui la microparticulation de protéines de type caséine et blanc d'œuf, ainsi que de fibres de soja en utilisant un broyeur à jets d'air. Ce document ne décrit pas de protéines de légumineuses. Il ne décrit pas non plus d'augmentation de la force de gel des protéines.

Le document Liu et al. (Ball-milling changed the physicochemical properties of SPI and its cold-set gels, Journal of Food Engineering, Vol.195, 2017, pages 158-165) décrit l'utilisation de broyeur à billes de type planet BM et Mixer Mill MM400 sur un isolat de protéine de soja, pour en réduire légèrement la taille de particules (taille moyenne de 80 $\mu$m). Toutefois, si la force de gel de cet isolat en conditions acides (en présence de glucono-delta-lactone) a pu être augmentée dans le cas du broyage utilisant un broyeur de type Mixer Mill MM400, cette augmentation reste très faible (une augmentation maximale de l'ordre de 30%). Par ailleurs, le broyage par le broyeur de type planet BM n'a conduit à aucune différence sur les forces de gel observées. Egalement, ce document n'étudie pas la force de gel des protéines mises en œuvre à pH neutre.

## Description générale de l'invention

Selon un premier aspect de l'invention, il est proposé une composition protéique de légumineuse, la légumineuse étant choisie parmi le pois et le lupin, caractérisée en ce que la force de gel de la composition protéique selon le test A est supérieure à 200 Pa, préférentiellement supérieure à 250 Pa, encore plus préférentiellement supérieure à 300 Pa et tout préférentiellement supérieure à 350 Pa, et caractérisée en ce qu'elle présente une taille de particules D90 inférieure à 20 microns, préférentiellement inférieure à 15 microns, encore plus préférentiellement inférieure à 10 microns. De manière préférentielle la composition protéique de légumineuse est un isolat protéique de légumineuse et plus préférentiellement un isolat protéique de pois.

Selon un autre aspect, il est proposé un procédé de production d'une composition protéique selon l'invention, caractérisé en ce qu'il comprend les étapes suivantes :

1) mise en œuvre de graines de légumineuses, choisie entre le pois et le lupin;
2) broyage des graines et réalisation d'une suspension aqueuse;
3) séparation par force centrifuge des fractions insolubles;
4) coagulation des protéines par chauffage au pH isoélectrique à une température comprise entre 55°C $^+/_-$ 2°C et 65°C $^+/_-$ 2°C, préférentiellement 60°C $^+/_-$ 2°C, pendant un temps compris entre 3,5 min et 4,5 min, préférentiellement 4 min;
5) récupération du floc protéique coagulé par centrifugation;
6) rectification du pH à une valeur comprise entre 6 $^+/_-$ 0,5 et 9 $^+/_-$ 0,5;
7) optionnellement, traitement thermique;
8) séchage du floc protéique coagulé ;
9) broyage du floc protéique coagulé par un broyeur à jets d'air et séché afin d'obtenir une taille de particules D90 inférieure à 20 microns, préférentiellement inférieure à 15 microns, encore plus préférentiellement inférieure à 10 microns.

Selon un dernier aspect de l'invention, il est proposé les utilisations industrielles, dans un produit alimentaire ou pharmaceutique, en particulier alimentaires animales et humaines, de la composition protéique de légumineuse, préférentiellement de l'isolat protéique de légumineuse, choisi entre le pois et le lupin, encore plus préférentiellement de l'isolat protéique de pois selon l'invention.

L'invention sera mieux comprise grâce à la description détaillée ci-dessous.

## Description détaillée de l'invention

Selon un premier aspect de l'invention, il est donc proposé une composition protéique de légumineuse, la légumineuse étant choisie parmi le pois et le lupin, caractérisée en ce que la force de gel de la composition protéique selon le test A est supérieure à 200 Pa, préférentiellement supérieure à 250 Pa, encore plus préférentiellement supérieure à 300Pa et tout préférentiellement supérieure à 350 Pa, et caractérisée en ce qu'elle présente une taille de particules D90 inférieure à 20 microns, préférentiellement inférieure à 15 microns, encore plus préférentiellement inférieure à 10 microns. La légumineuse est tout préférentiellement le pois. A titre d'exemple, la force de gel de la composition protéique selon le test A peut être inférieure à 450 Pa, par exemple inférieure à 400 Pa. De manière préférentielle la composition protéique de légumineuse est un isolat protéique de légumineuse et plus préférentiellement un isolat protéique de pois.

Le terme « composition protéique » doit se comprendre dans la présente demande comme une composition obtenue par extraction et raffinage, la dite composition comportant des protéines, macromolécules formées d'une ou de plusieurs chaînes polypeptidiques constituées de l'enchaînement de résidus d'acides aminés liés entre eux par des liaisons peptidiques. Dans le cadre particulier des protéines de pois, la présente invention concerne plus particulièrement les globulines (environ 50-60% des protéines du pois). Les globulines de pois se subdivisent principalement en trois sous-familles : les légumines, les vicilines et les convicilines.

Par « légumineuse », on comprendra dans la présente demande la famille de plantes dicotylédones de l'ordre des *Fabales.* C'est l'une des plus importantes familles de plantes à fleurs, la troisième après les *Orchidaceae* et les *Asteraceae* par le nombre d'espèces. Elle compte environ 765 genres regroupant plus de 19 500 espèces. Plusieurs légumineuses sont d'importantes plantes cultivées parmi lesquelles le soja, les haricots, les pois, le pois chiche, la féverole, l'arachide, la lentille cultivée, la luzerne cultivée, différents trèfles, les fèves, le caroubier, la réglisse, le lupin. Selon l'invention la légumineuse est choisie entre le pois et le lupin.

Par « pouvoir gélifiant », on entend la propriété fonctionnelle consistant en l'habilité d'une composition protéique à former un gel ou un réseau, faisant augmenter la viscosité et faisant générer un état de la matière intermédiaire entre les états liquides et solides. On peut également utiliser le terme « force de gel ». Pour quantifier ce pouvoir gélifiant, il est donc nécessaire de générer ce réseau et d'évaluer sa force. Pour effectuer cette quantification, dans la présente invention, on utilise le test A dont la description est la suivante :

1) Solubilisation à 60°C$^{+/-}$2°C de la composition protéique testée dans de l'eau titrant 15% $^{+/-}$2% en matière sèche et à pH 7;
2) Agitation pendant 5 min à 60°C $^{+/-}$2°C;
3) Refroidissement à 20°C $^{+/-}$2°C et agitation durant 24 heures à 350 tr/min;
4) Mise en œuvre de la suspension dans un rhéomètre à contrainte imposée équipé avec un cylindre concentrique;
5) Mesure des modules élastiques G' et modules visqueux G" en appliquant un profil de température suivant:

a. Phase 1: Mesure du paramètre G'1 après stabilisation à 20°C $^{+/-}$2°C et chauffage d'une température de 20°C $^{+/-}$2°C à une température de 80°C $^{+/-}$2°C en 10 minutes;
b. Phase 2: stabilisation à une température de 80°C $^{+/-}$2°C pendant 110 minutes;
c. Phase 3: refroidissement d'une température de 80°C $^{+/-}$2°C à une température de 20°C $^{+/-}$2°C en 30 min et mesure de G'2 après stabilisation à 20°C $^{+/-}$2°C ; 6) Calcul du pouvoir gélifiant égal à G'2 - G'1.

De manière préférée, les rhéomètres à contrainte imposée sont choisis parmi les modèles DHR 2 (TA, instruments) et MCR 301 (Anton Paar), avec un mobile de type cylindre concentrique. Ils possèdent un système de régulation de température à effet Peltier. Afin d'éviter les problèmes d'évaporation à haute température, de l'huile de paraffine est ajoutée sur les échantillons.

Un « rhéomètre » au sens de l'invention est un appareil de laboratoire capable de faire des mesures relatives à la rhéologie d'un fluide ou d'un gel. Il applique une force à l'échantillon. Généralement de faible dimension caractéristique (très faible inertie mécanique du rotor), il permet d'étudier fondamentalement les propriétés mécaniques d'un liquide, d'un gel, d'une suspension, d'une pâte, etc., en réponse à une force appliquée.

Les modèles dits « à contrainte imposée » permettent, en appliquant une sollicitation sinusoïdale (mode oscillation), de déterminer les grandeurs viscoélastiques intrinsèques de la matière, qui dépendent notamment du temps (ou de la vitesse angulaire ω) et de la température. En particulier, ce type de rhéomètre permet d'accéder au module complexe G*, permettant lui-même d'avoir accès aux modules G' ou partie élastique et G" ou partie visqueuse;

Les trois premières étapes consistent en une remise en suspension de la protéine dans de l'eau, dans des conditions précises permettant de maximiser la mesure postérieure.

L'eau choisie est préférentiellement de l'eau osmosée, mais on peut également utiliser de l'eau potable.

Sa température est de 60°C$^{+/-}$2°C lors de la remise en suspension initiale (1ère et 2ème étapes) puis de 20°C$^{+/-}$2°C après solubilisation pendant 24h et refroidissement avant mesure (3ème étape). D'une manière générale et sauf indication contraire, lorsqu'une température est donnée dans la présente description, elle comprend toujours une variation de $^{+/-}$2°C, par exemple 20°C $^{+/-}$2°C ou 80°C $^{+/-}$2°C.

On ajoute une quantité définie de protéine dans ladite eau afin d'obtenir une suspension titrant 15% $^{+/-}$2% en matière sèche. Pour ce faire, on utilise le matériel bien connu de l'homme du métier tel que béchers, barreaux magnétiques. Agiter un volume de 50mL pendant minimum 10h à 350 tr/min à température ambiante. D'une manière générale et sauf indication contraire, les teneurs en matières sèches données dans la présente description comprennent toujours une variation de $^{+/-}$2%, par exemple 15% $^{+/-}$2%. Le pH est ajusté à 7 $^{+/-}$0,5 à l'aide d'un pHmètre et de réactifs acido-basiques, comme bien connu dans l'art antérieur.

La quatrième étape consiste à introduire l'échantillon dans le rhéomètre en couvrant celui-ci avec une fine couche d'huile afin de limiter l'évaporation.

On applique alors lors de la cinquième étape un barème de température suivant: a. Phase 1 : chauffage d'une température de 20°C $^+/_-$ 2°C à une température de 80°C $^+/_-$ 2°C en 10 minutes ; b. Phase 2 : stabilisation à une température de 80°C $^+/_-$ 2°C pendant 110 minutes ; c. Phase 3 : refroidissement d'une température de 80°C $^+/_-$ 2°C à une température de 20°C $^+/_-$ 2°C en 30 min.

La mesure du paramètre G' est effectuée en continu pendant ce barème et est enregistrée.

La sixième et dernière étape du test A consiste en l'exploitation de l'enregistrement. On extrait deux valeurs : G'1 = valeur de G' en début de phase 1 après stabilisation à 20°C $^+/_-$ 2°C et G'2 = valeur de G' en fin de phase 3 après stabilisation à 20°C $^+/_-$ 2°C.

Le pouvoir gélifiant est égal à G'2 - G'1.

De manière préférentielle, la composition protéique de légumineuse selon l'invention présente une richesse en protéine supérieure à 80%, préférentiellement supérieure à 85%, encore plus préférentiellement supérieure à 90% en poids de matière sèche par rapport au poids total de la matière sèche.

La richesse en protéine est mesurée par toute technique bien connue de l'homme du métier. De préférence, on réalise un dosage de l'azote total (en pourcentage en poids d'azote par rapport au poids sec total de la composition) et on multiplie le résultat par le coefficient 6,25. Cette méthodologie bien connue dans le domaine des protéines végétales se base sur le constat que les protéines contiennent en moyenne 16% d'azote. Toute méthode de dosage de la matière sèche bien connue de l'homme du métier peut être également utilisée.

Selon l'invention, la composition protéique présente une taille de particules D90 inférieure à 20 microns, préférentiellement inférieure à 15 microns, encore plus préférentiellement inférieure à 10 microns.

Par « D90 », on entend dans la présente invention la taille de particules en microns séparant en deux populations en nombre contenant respectivement 90% et 10% de l'ensemble des particules totale de la composition protéique.

Pour effectuer cette mesure du D90, on utilise préférentiellement un granulomètre laser, encore plus préférentiellement le Mastersizer 2000 de la société Malvern. Les paramètres utilisés sont les suivants : Utilisation en voie liquide, dispersion dans de l'alcool éthylique ; Indice de réfraction : 1,52 ; Indice d'absorption : 0,1 ; pas d'utilisation d'ultrasons.

Préférentiellement, la composition protéique selon l'invention présente une solubilité à pH neutre importante. Pour quantifier la solubilité de la composition protéique, on utilise selon la présente invention le test B. Ce test B consiste en les étapes suivantes :

Dans un bécher de 400 mL, on introduit 150 g d'eau distillée à une température de 20°C +/- 2°C sous agitation avec un barreau magnétique et on ajoute précisément 5 g d'échantillon de protéine de légumineuse à tester. Si besoin, on ajuste le pH à 7 avec NaOH 0,1 N ou HCl 0,1 N. On complète le contenu en eau pour atteindre 200 g d'eau. On mélange pendant 30 minutes à 1000 rpm et on centrifuge pendant 15 minutes à 3000 g. On collecte 25 g du surnageant que l'on introduit dans un cristallisoir préalablement séché et taré. On place le cristallisoir dans une étuve à 103°C +/- 2°C pendant 1 heure. On le place ensuite dans un dessiccateur (avec agent déshydratant) pour refroidir à température ambiante et on le pèse.

La solubilité correspond au contenu en matières sèches solubles, exprimé en % en poids par rapport au poids de l'échantillon. La solubilité est calculée avec la formule suivante :

[Math. 1]

$$\% \, solubilité = \frac{(m1 - m2) \times (200 + P)}{P1 \times P} \times 100$$

où :

P = poids, en g, de l'échantillon = 5 g
m1 = poids, en g, du cristallisoir après séchage
m2 = poids, en g, du cristallisoir vide
P1 = poids, en g, de l'échantillon collecté = 25 g

Avantageusement, la solubilité de la composition protéique de l'invention selon le test B va de 30 à 65%, par exemple de 33 à 62%, notamment de 38 à 60%.

Un avantage supplémentaire de l'invention est qu'il est possible d'augmenter les propriétés gélifiantes des protéines de pois, tout en maintenant leur solubilité. Or, ces propriétés peuvent apparaître comme difficilement conciliables : par exemple, une augmentation de la solubilité d'une protéine en effectuant une protéolyse se combine avec une perte de ses propriétés gélifiantes. Sans être liée à une quelconque théorie, ceci s'explique par le fait que, généralement, pour obtenir la formation d'un gel protéique, il faut, une fois les protéines agrégées, que celles-ci forment un réseau. En conséquence, les protéines gélifiantes étant plus grosses, même une fois remises en solution, celles-ci présentent généralement une solubilité moins bonne. Or, l'invention permet de concilier les deux propriétés.

Selon un autre aspect, il est proposé un procédé permettant de produire une composition protéique de légumineuse selon l'invention caractérisé en ce qu'il comprend les étapes suivantes :

1) mise en œuvre de graines de légumineuses, choisie entre le pois et le lupin;
2) broyage des graines et réalisation d'une suspension aqueuse;
3) séparation par force centrifuge des fractions insolubles;
4) coagulation des protéines par chauffage au pH isoélectrique à une température comprise entre 55°C $^+/_-$ 2°C et 65°C $^+/_-$ 2°C, préférentiellement 60°C $^+/_-$ 2°C, pendant un temps compris entre 3,5 min et 4,5 min, préférentiellement 4 min ;
5) récupération du floc protéique coagulé par centrifugation ;
6) rectification du pH à une valeur comprise entre 6 $^+/_-$ 0,5 et 9 $^+/_-$ 0,5 ;
7) optionnellement, traitement thermique ;
8) séchage du floc protéique coagulé ;
9) broyage du floc protéique coagulé par un broyeur à jets d'air afin d'obtenir une taille de particules D90 inférieure à 20 microns, préférentiellement inférieure à 15 microns, encore plus préférentiellement inférieure à 10 microns.

Le procédé démarre donc par une étape 1) de mise en œuvre de graines de légumineuses, choisie entre le pois et le lupin.

Lorsque la légumineuse choisie est le pois, les pois mis en œuvre dans l'étape 1) auront pu subir au préalable des étapes bien connues de l'homme du métier, telles que notamment un nettoyage (élimination des particules non désirées telles que pierres, insectes morts, résidus de terre, etc.) ou bien encore l'élimination des fibres externes du pois (enveloppe externe cellulosique) par une étape bien connue appelée « dehulling ».

Des traitements visant à améliorer l'organoleptique tels qu'un chauffage à sec (ou roasting) ou un blanchiment par voie humide sont également possibles. Pour le blanchiment, la température est préférentiellement comprise entre 70°C $^+/_-$ 2°C et 90°C $^+/_-$ 2°C et le pH est ajusté entre 8 $^+/_-$ 0,5 et 10 $^+/_-$ 0,5, préférentiellement à 9 $^+/_-$ 0,5. Ces conditions sont maintenues pendant 2 à 4 min, préférentiellement pendant 3 min.

Le procédé selon l'invention comprend une étape 2) de broyage des graines et réalisation d'une suspension aqueuse. Si les grains sont déjà en présence d'eau, l'eau est conservée mais peut également être renouvelée, et les grains sont directement broyés. Si les grains sont secs, on réalise tout d'abord une farine et celle-ci est mise en suspension dans l'eau.

Le broyage est effectué par tout type de technologie adéquate connu de l'homme du métier tel que des broyeurs à billes, des broyeurs coniques, des broyeurs hélicoïdaux, des broyeurs à jets d'air ou bien des systèmes rotor/rotor.

Lors du broyage, de l'eau peut être ajoutée de manière continue ou discontinue, au début, au milieu ou en fin de broyage, afin d'obtenir en fin d'étape une suspension aqueuse de pois broyés titrant entre 15% et 25% en poids de matière sèche (MS), préférentiellement 20% en poids de MS, par rapport au poids de ladite suspension.

En fin de broyage, un contrôle du pH peut être effectué. De préférence, le pH de la suspension aqueuse de pois broyés en fin d'étape 2 est ajusté entre 5,5 $^+/_-$ 0,5 et 10 $^+/_-$ 0,5, par exemple le pH est ajusté va de 6 $^+/_-$ 0,5 à 9 $^+/_-$ 0,5. Alternativement le pH est ajusté entre 8 $^+/_-$ 0,5 et 10 $^+/_-$ 0,5, par exemple le pH est ajusté à 9. La rectification de pH peut être effectuée par ajout d'acide et/ou de base, par exemple de la soude ou de l'acide chlorhydrique.

Le procédé selon l'invention consiste ensuite en une étape 3) de séparation par force centrifuge des fractions insolubles. Celle-ci sont majoritairement constituées d'amidon et de polysaccharides appelés « fibres internes ». On concentre ainsi les protéines solubles dans le surnageant.

Le procédé selon l'invention comprend une étape 4) de coagulation des protéines par chauffage au pH isoélectrique à une température comprise entre 55°C $^+/_-$ 2°C et 65°C $^+/_-$ 2°C, préférentiellement 60°C $^+/_-$ 2°C, pendant un temps compris entre 3,5 min et 4,5 min, préférentiellement 4 min. Le but est ici de séparer les protéines de pois d'intérêt des autres constituants du surnageant de l'étape 3). Un tel exemple de procédé est par exemple décrit dans le brevet EP1400537 de la Demanderesse, du paragraphe 127 au paragraphe 143. Il est capital de bien contrôler le barème temps/température : comme il sera exemplifié ci-après dans la partie exemple, ces paramètres sont clés afin d'obtenir une composition protéique gélifiante selon l'invention.

L'étape 5) suivante consiste en la récupération du floc protéique coagulé par centrifugation. On sépare ainsi les fractions solides ayant concentré les protéines, des fractions liquides ayant concentré les sucres et les sels.

Dans une étape 6), le floc est remis en suspension dans de l'eau et son pH est rectifié à une valeur comprise entre 6 $^+/_-$ 0,5 et 9 $^+/_-$ 0,5. La matière sèche est ajustée entre 10% et 20%, préférentiellement 15% en poids de matière sèche par rapport au poids de ladite suspension. Le pH est ajusté à l'aide de tout réactif(s) acide(s) et basique(s). L'utilisation d'acide ascorbique, d'acide citrique et de potasse, de soude sont préférés.

Il est possible de réaliser une étape 7), optionnelle, consistant en un traitement thermique visant à garantir la qualité microbiologique de la protéine. Ce traitement thermique peut également servir à fonctionnaliser la composition protéique. Il est donc préférentiellement effectué selon un barème classique de 100°C $^{+/}$ 2°C à 160°C $^{+/}$ 2°C pendant 0,01s à 3s, préférentiellement entre 1 et 2 secondes suivi d'un refroidissement immédiat.

Dans une étape 8), le floc protéique coagulé est séché pour atteindre une matière sèche supérieure à 80%, préférentiellement supérieure à 90% en poids de matière sèche par rapport au poids de ladite matière sèche. On utilise pour ce faire toute technique bien connue de l'homme du métier comme par exemple la lyophilisation ou bien encore l'atomisation. L'atomisation est la technologie préférée, en particulier l'atomisation à multiple effet.

La teneur en matière sèche est mesurée par toute méthode bien connue de l'homme de l'art. De manière préférentielle, la méthode dite « par dessiccation » est utilisée. Elle consiste à déterminer la quantité d'eau évaporée par chauffage d'une quantité connue d'un échantillon de masse connue : On pèse l'échantillon au départ et on mesure une masse m1 en g ; On évapore l'eau en plaçant l'échantillon dans une enceinte chauffée jusqu'à stabilisation de la masse de l'échantillon, l'eau étant complétement évaporée (de préférence, la température est de 105°C sous pression atmosphérique), on pèse l'échantillon final et on mesure une masse m2 en g. La matière sèche est obtenue par le calcul suivant :

$$(m2 / m1)*100.$$

La dernière étape 9) est tout comme l'étape 4) précédente, clé pour l'obtention de la composition protéique selon l'invention. Elle consiste en un broyage du floc protéique coagulé et séché afin d'obtenir une taille de particules D90 inférieure à 20 microns, préférentiellement inférieure à 15 microns, encore plus préférentiellement inférieure 10 microns. On utilise dans cette étape du procédé de l'invention un broyeur à jets d'air. On préfère néanmoins l'utilisation d'un broyeur à jets d'air opposés, encore plus préférentiellement le Netzsch CGS10. Ce type de broyeurs opère la réduction de taille en générant des collisions : les particules, accélérées par des jets de gaz à grande vitesse sont fragmentées par choc.

Dans un procédé avantageux de l'invention, la force de gel de la composition protéique selon le test A est d'au moins 150% de la force de gel du floc protéique séché à l'étape 8, avantageusement d'au moins 200%, par exemple d'au moins 300%. La force de gel de la composition protéique selon le test A peut être, par exemple, d'au plus 600% de la force de gel du floc protéique séché à l'étape 8.

Comme susmentionné, un des avantages de l'invention est que la solubilité de la protéine peut être maintenue lors de l'étape de broyage. Avantageusement, la solubilité de la composition protéique selon le test B est d'au moins 75% de la solubilité du floc protéique séché à l'étape 8, avantageusement d'au moins 90%.

Un avantage de l'invention est que les compositions protéiques de l'invention peuvent présenter une force de gel plus importante à différents pH, et en particulier à pH neutre, comme dans les conditions du test A. L'utilisation de la composition protéique selon l'invention est avantageuse dans tout type de produit alimentaire et pharmaceutique : le produit alimentaire ou pharmaceutique peut avoir un pH allant de 4 à 9, par exemple de 5 à 8,5, notamment de 6 à 8 ou encore d'environ 7.

Selon un dernier aspect de l'invention, il est proposé les utilisations industrielles, en particulier alimentaires animales et humaines, de la composition protéique de légumineuse, préférentiellement de l'isolat protéique de légumineuse, choisi entre le pois et le lupin, encore plus préférentiellement de l'isolat protéique de pois selon l'invention.

Du fait de son pouvoir gélifiant amélioré, la composition protéique selon l'invention est particulièrement adaptée pour les applications alimentaires telles que les yaourts végétaux ou les succédanés de viandes (« meat-analogs » en anglais). Elle peut notamment être utilisée dans des substituts de viande ou de poisson. Elle peut notamment être utilisée comme agent liant, par exemple comme agent liant utile à la fabrication de substituts de viande ou de poisson. Un autre aspect de l'invention est donc un substitut de viande ou de poisson comprenant la composition protéique de l'invention.

L'invention sera mieux comprise à l'aide des exemples non-limitatifs ci-dessous.

Exemples

Exemple 1 : Production d'une composition protéique de légumineuse selon l'invention

Après décorticage des fibres externes sur broyeur à marteaux, on broie des graines de pois afin d'obtenir une farine. Celle-ci est ensuite mise à tremper dans de l'eau à la concentration finale de 25 % en poids de matière sèche par rapport au poids de ladite suspension, à un pH de 6,5, pendant 30 minutes à température ambiante. La suspension de farine à 25 % en poids de matière sèche est alors introduite dans une batterie d'hydrocyclones, séparant une phase légère constituée du mélange protéines, fibres internes (pulpes) et solubles et une phase lourde, renfermant l'amidon. La phase légère en sortie d'hydrocyclones est ensuite amenée à une teneur en matière sèche de 10,7 % par rapport au poids de ladite suspension. On procède à la séparation des fibres internes par passage sur des décanteurs centrifuges de type WESTFALIA. La phase légère en sortie de décanteur centrifuge renferme un mélange de protéines et de solubles, tandis que la phase lourde renferme les fibres de pois.

On procède à la coagulation des protéines à leur point isoélectrique par ajustement de la phase légère de sortie de décanteur centrifuge à un pH de 4,6 et chauffage à 60°C de cette solution pendant 4 min. Après coagulation des protéines, on récupère un floc protéique. Celui-ci est remis en suspension à 15,1% de matière sèche par rapport au poids de ladite suspension dans de l'eau potable. Le pH de la suspension est rectifié à une valeur de 7 avec de la potasse. On réalise enfin un traitement thermique à 130°C pendant 0,4s suivi d'un refroidissement flash. La suspension est enfin atomisée sur un atomiseur NIRO à multiple-effet MSD, la température d'entrée de l'air étant de 180°C, et celle de sortie étant de 80°C. La poudre obtenue tirait 92,3% de matière sèche par rapport au poids total de la matière sèche dont 85,5% de protéines. Cette poudre est appelée « Base pour composition selon l'invention »

Cette poudre a ensuite été broyée à l'aide d'un broyeur à jets d'air opposés Netzsch CGS10 afin d'obtenir une poudre dont la taille de particules D90 est de 7,3 microns.

La composition protéique en poudre obtenue est appelée « Composition protéique micronisée selon l'invention ».

Exemple 2 : Exemple comparatif visant à démontrer l'influence du barème de chauffage de la composition protéique lors de la coagulation de celle-ci

Le but de cet exemple est de démontrer l'impact du barème de coagulation sur les fonctionnalités de la composition protéique selon l'invention.

Après décorticage des fibres externes sur broyeur à marteaux, on broie des graines de pois afin d'obtenir une farine. Celle-ci est ensuite mise à tremper dans de l'eau à la concentration finale de 25,1 % en poids de matière sèche par rapport au poids de ladite suspension, à un pH de 6,5, pendant 30 minutes à température ambiante. La suspension de farine à 25 % en poids de matière sèche est alors introduite dans une batterie d'hydrocyclones, séparant une phase légère constituée du mélange protéines, fibres internes (pulpes) et solubles et une phase lourde, renfermant l'amidon. La phase légère en sortie d'hydrocyclones est ensuite amenée à une teneur en matière sèche de 11,2 % par rapport au poids de ladite suspension. On procède à la séparation des fibres internes par passage sur des décanteurs centrifuges de type WESTFALIA. La phase légère en sortie de décanteur centrifuge renferme un mélange de protéines et de solubles, tandis que la phase lourde renferme les fibres de pois.

On procède à la coagulation des protéines à leur point isoélectrique par ajustement de la phase légère de sortie de décanteur centrifuge à un pH de 4,6 et chauffage à 70°C de cette solution pendant 4 min. Après coagulation des protéines, on récupère un floc protéique. Celui-ci est remis en suspension à 14,9% de matière sèche par rapport au poids de ladite suspension dans de l'eau potable. Le pH de la suspension est rectifié à une valeur de 7 avec de la potasse. On réalise enfin un traitement thermique à 130°C pendant 0,4s suivi d'un refroidissement flash. La suspension est enfin atomisée sur un atomiseur NIRO à multiple-effet MSD, la température d'entrée de l'air étant de 180°C, et celle de sortie étant de 80°C. La poudre obtenue tirait 91,9% de matière sèche par rapport au poids total de la matière sèche dont 84,9% de protéines. Cette poudre est appelée « Base pour Composition protéique comparative n°1».

Cette poudre a ensuite été broyée à l'aide d'un broyeur à jets d'air opposés Netzsch CGS10 afin d'obtenir une poudre dont la taille de particules D90 est de 8,2 microns.

La composition protéique en poudre obtenue est appelée « Composition protéique micronisée comparative n°1 ».

Exemple 3 : Comparaison des différentes compositions protéiques obtenues dans les exemples 1 et 2

Afin de comparer les compositions protéiques, on utilise le Test A tel que décrit précédemment, ainsi que la matière sèche et la richesse protéique :

[Tableau 1]

| | Base pour composition protéique selon l'invention | Composition protéique micronisée selon l'invention | Base pour composition protéique comparative n°1 | Composition protéique micronisée comparative n°1 |
|---|---|---|---|---|
| Matière sèche (%) | 92,3 | 96,7 | 91,9 | 96,5 |
| Richesse protéique (% Matière sèche) | 85,5 | 85,0 | 84,9 | 86,1 |
| Pouvoir gélifiant (Pa) selon le Test A | 98 | 375 | 103 | 109 |
| D90 (en microns) | 233,2 | 7,3 | 187,1 | 8,2 |

Le Tableau 1 ci-dessus démontre sans équivoque l'extrême importance de la synergie du barème de température de coagulation et de la réduction de la granulométrie à une taille de particules D90 inférieure à 10 microns, afin de maximiser le pouvoir gélifiant. Le pouvoir gélifiant de la composition protéique micronisée selon la présente invention est environs 4 fois plus élevé que la base pour composition protéique selon l'invention, la base pour composition protéique comparative n°1 et la composition protéique micronisée comparative n°1.

Exemple 4 : Production d'une composition protéique de légumineuse selon l'invention

Après décorticage des fibres externes sur broyeur à marteaux, on broie des graines de pois afin d'obtenir une farine. Celle-ci est ensuite mise à tremper dans de l'eau à la concentration finale de 25 % en poids de matière sèche par rapport au poids de ladite suspension, à un pH de 6,5, pendant 30 minutes à température ambiante. La suspension de farine à 25 % en poids de matière sèche est alors introduite dans une batterie d'hydrocyclones, séparant une phase légère constituée du mélange protéines, fibres internes (pulpes) et solubles et une phase lourde, renfermant l'amidon. La phase légère en sortie d'hydrocyclones est ensuite amenée à une teneur en matière sèche de 10 % par rapport au poids de ladite suspension. On procède à la séparation des fibres internes par passage sur des décanteurs centrifuges de type WESTFALIA. La phase légère en sortie de décanteur centrifuge renferme un mélange de protéines et de solubles, tandis que la phase lourde renferme les fibres de pois.

On procède à la coagulation des protéines à leur point isoélectrique par ajustement de la phase légère de sortie de décanteur centrifuge à un pH de 5,0 et chauffage à 60°C de cette solution pendant 4 min. Après coagulation des protéines, on récupère un floc protéique. Celui-ci est remis en suspension à 18 % de matière sèche par rapport au poids de ladite suspension dans de l'eau potable. Le pH de la suspension est rectifié à une valeur de 7 avec de la soude. On réalise enfin un traitement thermique à 130°C pendant 0,4s suivi d'un refroidissement flash. La suspension est enfin atomisée sur un atomiseur NIRO à multiple-effet MSD, la température d'entrée de l'air étant de 180°C, et celle de sortie étant de 80°C. La poudre obtenue tirait 93,2% de matière sèche par rapport au poids total de la matière sèche dont 80,7% de protéines. Cette poudre est appelée « Base 2 pour composition selon l'invention »

Cette poudre a ensuite été broyée à l'aide d'un broyeur à jets d'air opposés Netzsch CGS10 pendant deux durées différentes, de manière à obtenir première poudre dont la taille de particules D90 est de 16,9 microns et une seconde poudre dont la taille de particules D90 est de 7,9 microns. Les compositions protéiques en poudre obtenues sont appelées respectivement « Composition protéique micronisée selon l'invention 2 » et « Composition protéique micronisée selon l'invention 3 ».

Afin de comparer les compositions protéiques, on utilise les Test A et B tels que décrits précédemment, ainsi que la matière sèche et la richesse protéique :

[Tableau 2]

|  | Base 2 pour composition protéique selon l'invention | Composition protéique micronisée selon l'invention 2 | Composition protéique micronisée selon l'invention 3 |
|---|---|---|---|
| Matière sèche (%) | 93,2 | 96,2 | 95,6 |
| Richesse protéique (% Matière sèche) | 80,7 | 81,3 | 81,7 |
| Pouvoir gélifiant (Pa) selon le Test A | 112 | 229 | 235 |
| Solubilité (%) selon le Test B | 43,5 | 33,8 | 42,7 |
| D90 (en microns) | 253,2 | 16,9 | 7,9 |

Le Tableau 2 ci-dessus démontre encore qu'il est possible de maximiser le pouvoir gélifiant. Le pouvoir gélifiant des compositions protéiques micronisées selon la présente invention est plus de 2 fois plus élevé. Par ailleurs, il est également possible de maintenir la solubilité de la protéine.

**Revendications**

1.  Composition protéique de légumineuse, la légumineuse étant choisie parmi le pois et le lupin, **caractérisée en ce que** la force de gel de la composition protéique selon le test A décrit dans la description est supérieure à 200 Pa, et **caractérisée en ce qu'**elle présente une taille de particules en nombre D90 inférieure à 20 microns, préférentiellement inférieure à 15 microns, encore plus préférentiellement inférieure à 10 microns.

2.  Composition protéique selon la revendication 1 dans laquelle la composition protéique de légumineuse est un isolat protéique de légumineuse.

3. Composition protéique selon la revendication 1 ou 2 dans laquelle la légumineuse est le pois.

4. Composition protéique selon l'une des revendications 1 à 3 **caractérisée en ce qu'**elle possède une richesse en protéine supérieure à 80%, préférentiellement supérieure à 85%, encore plus préférentiellement supérieure à 90% en poids de matière sèche par rapport au poids total de la matière sèche.

5. Composition protéique selon l'une des revendications 1 à 4 **caractérisée en ce qu'**elle présente une solubilité selon le test B décrit dans la description allant de 30 à 65%, par exemple de 33 à 62%, notamment de 38 à 60%.

6. Procédé de production d'une composition protéique selon les revendications 1 à 5 **caractérisé en ce qu'**il comprend les étapes suivantes :

1) mise en œuvre de graines de légumineuses, choisie entre le pois et le lupin;
2) broyage des graines et réalisation d'une suspension aqueuse;
3) séparation par force centrifuge des fractions insolubles;
4) coagulation des protéines chauffage au pH isoélectrique à une température comprise entre 55°C $^+/_-$ 2°C et 65°C $^+/_-$ 2°C, préférentiellement 60°C $^+/_-$ 2°C, pendant un temps compris entre 3,5 min et 4,5 min, préférentiellement 4 min;
5) récupération du floc protéique coagulé par centrifugation ;
6) rectification du pH à une valeur comprise entre 6 $^+/_-$ 0,5 et 9 $^+/_-$ 0,5 ;
7) optionnellement, traitement thermique ;
8) séchage du floc protéique coagulé ;
9) broyage du floc protéique coagulé et séché par un broyeur à jets d'air afin d'obtenir une taille de particules en nombre D90 inférieure à 20 microns, préférentiellement inférieure à 15 microns, encore plus préférentiellement inférieure à 10 microns.

7. Procédé selon la revendication 6 **caractérisé en ce que** le traitement thermique de l'étape 7 consiste en un barème de 100°C $^+/_-$ 2°C à 160°C $^+/_-$ 2°C pendant 0,01s à 3s, préférentiellement entre 1 et 2 secondes suivi d'un refroidissement immédiat.

8. Procédé selon l'une des revendications 6 à 7 **caractérisé en ce que** le séchage de l'étape 8 est réalisé par atomisation, de préférence par atomisation à multiple effet.

9. Procédé selon l'une des revendications 6 à 8 **caractérisé en ce que** le broyage de l'étape 9 est réalisé à l'aide d'un broyeur à jets d'air opposés.

10. Procédé selon l'une des revendications 6 à 9 **caractérisé en ce que** la force de gel de la composition protéique selon le test A est d'au moins 150% de la force de gel du floc protéique séché à l'étape 8.

11. Utilisation de la composition selon l'une des revendications 1 à 5 dans un produit alimentaire ou pharmaceutique.

12. Utilisation selon la revendication 11 dans laquelle le produit alimentaire ou pharmaceutique a un pH allant de 4 à 9, par exemple de 5 à 8,5, notamment de 6 à 8 ou encore d'environ 7.

13. Utilisation selon la revendication 11 ou 12 **caractérisée en ce que** le produit est un substitut de viande ou de poisson.

**Patentansprüche**

1. Proteinzusammensetzung aus Hülsenfrüchten, wobei die Hülsenfrüchte aus Erbsen und Lupinen gewählt sind, **dadurch gekennzeichnet, dass** die Gelstärke der Proteinzusammensetzung gemäß dem in der Beschreibung beschriebenen Test A größer als 200 Pa ist und dadurch, dass dass sie eine D90-Partikelgröße von weniger als 20 Mikrometern aufweist, bevorzugt weniger als 15 Mikrometern, stärker bevorzugt weniger als 10 Mikrometern.

2. Proteinzusammensetzung nach Anspruch 1, wobei die Proteinzusammensetzung aus Hülsenfrüchten ein Proteinisolat aus Hülsenfrüchten ist.

**3.** Proteinzusammensetzung nach Anspruch 1 oder 2, wobei die Hülsenfrüchte Erbsen sind.

**4.** Proteinzusammensetzung nach einem der Ansprüche 1 bis 3, **dadurch gekennzeichnet, dass** sie einen Proteingehalt von mehr als 80 %, bevorzugt mehr als 85 %, stärker bevorzugt mehr als 90 % in Trockengewicht im Verhältnis zum Gesamtgewicht der Trockenmasse aufweist.

**5.** Proteinzusammensetzung nach einem der Ansprüche 1 bis 4, **dadurch gekennzeichnet, dass** sie eine Löslichkeit gemäß dem in der Beschreibung beschriebenen Test B von 30 bis 65 %, beispielsweise von 33 bis 62 %, insbesondere von 38 bis 60 %, aufweist.

**6.** Verfahren zur Herstellung einer Proteinzusammensetzung nach den Ansprüchen 1 bis 5, **dadurch gekennzeichnet, dass** es die folgenden Schritte umfasst:

1) Verwendung von Hülsenfrüchten, gewählt aus Erbsen und Lupinen;
2) Zerkleinern der Samen und Herstellen einer wässrigen Suspension;
3) Trennen der unlöslichen Fraktionen durch Zentrifugalkraft;
4) Gerinnung der Proteine durch Erhitzen auf den isoelektrischen pH-Wert bei einer Temperatur zwischen 55 °C +/- 2 °C und 65 °C +/- 2 °C, bevorzugt 60 °C +/- 2 °C, während einer Zeit zwischen 3,5 min und 4,5 min, bevorzugt 4 min;
5) Gewinnung der koagulierten Proteinflocken durch Zentrifugieren;
6) Korrektur des pH-Werts auf einen Wert zwischen 6 +/- 0,5 und 9 +/- 0,5;
7) optional thermische Behandlung;
8) Trocknen der koagulierten Proteinflocken;
9) Zerkleinern der koagulierten und getrockneten Proteinflocken mit einem Luftstrahlmühle, um eine D90-Partikelgröße von weniger als 20 Mikrometern, bevorzugt weniger als 15 Mikrometern, stärker bevorzugt weniger als 10 Mikrometern zu erhalten.

**7.** Verfahren nach Anspruch 6, **dadurch gekennzeichnet, dass** die Wärmebehandlung in Schritt 7 aus einem Temperaturbereich von 100 °C +/- 2 °C bis 160 °C +/- 2 °C für 0,01 bis 3 s, bevorzugt zwischen 1 und 2 Sekunden, gefolgt von einer sofortigen Abkühlung besteht.

**8.** Verfahren nach einem der Ansprüche 6 bis 7, **dadurch gekennzeichnet, dass** die Trocknung in Schritt 8 durch Zerstäubung, bevorzugt durch Mehrfachzerstäubung, durchgeführt wird.

**9.** Verfahren nach einem der Ansprüche 6 bis 8, **dadurch gekennzeichnet, dass** das Mahlen in Schritt 9 mit Hilfe einer Gegenstrommühle durchgeführt wird.

**10.** Verfahren nach einem der Ansprüche 6 bis 9, **dadurch gekennzeichnet, dass** die Gelstärke der Proteinzusammensetzung gemäß Test A mindestens 150 % der Gelstärke der in Schritt 8 getrockneten Proteinflocken beträgt.

**11.** Verwendung der Zusammensetzung nach einem der Ansprüche 1 bis 5 in einem Lebensmittel- oder Pharmaprodukt.

**12.** Verwendung nach Anspruch 11, wobei das Lebensmittel oder Pharmaprodukt einen pH-Wert von 4 bis 9, beispielsweise von 5 bis 8,5, insbesondere von 6 bis 8 oder etwa 7 aufweist.

**13.** Verwendung nach Anspruch 11 oder 12, **dadurch gekennzeichnet, dass** das Produkt ein Fleisch- oder Fischersatz ist.

**Claims**

**1.** A leguminous plant protein composition, the leguminous plant being chosen from pea and lupin, **characterized in that** the gel strength of the protein composition according to test A described in the description is greater than 200 Pa, and **characterized in that** it has a particle size by number D90 of less than 20 microns, preferentially less than 15 microns, even more preferentially less than 10 microns.

**2.** The protein composition as claimed in claim 1, in which the leguminous plant protein composition is a leguminous plant protein isolate.

3. The protein composition as claimed in claim 1 or 2, in which the leguminous plant is a pea plant.

4. The protein composition as claimed in one of claims 1 to 3, **characterized in that** it has a protein content of greater than 80%, preferentially greater than 85%, even more preferentially greater than 90% by weight of solids relative to the total weight of solids.

5. The protein composition as claimed in one of claims 1 to 4, **characterized in that** it has a solubility according to test B described in the description ranging from 30% to 65%, for example from 33% to 62%, notably from 38% to 60%.

6. A process for producing a protein composition as claimed in claims 1 to 5, **characterized in that** it comprises the following steps:

   1) providing leguminous plant seeds, chosen from pea and lupin;
   2) milling the seeds and producing an aqueous suspension;
   3) separating out insoluble fractions using centrifugal force;
   4) coagulating the proteins by heating at the isoelectric pH at a temperature of between 55°C $\pm$ 2°C and 65°C $\pm$ 2°C, preferentially of 60°C $\pm$ 2°C, for a time of between 3.5 min and 4.5 min, preferentially of 4 min;
   5) collecting the coagulated protein floc by centrifugation;
   6) adjusting the pH to a value of between 6 $\pm$ 0.5 and 9 $\pm$ 0.5;
   7) optionally, heat treatment;
   8) drying the coagulated protein floc;
   9) milling the coagulated and dried protein floc using a jet mill in order to obtain a particle size by number D90 of less than 20 microns, preferentially less than 15 microns, even more preferentially less than 10 microns.

7. The process as claimed in claim 6, **characterized in that** the heat treatment in step 7 consists of a protocol of from 100°C $\pm$ 2°C to 160°C $\pm$ 2°C for 0.01s to 3s, preferentially between 1 and 2 seconds, immediately followed by cooling.

8. The process as claimed in either of claims 6 and 7, **characterized in that** the drying in step 8 is performed by atomization, preferably multiple-effect atomization.

9. The process as claimed in one of claims 6 to 8, **characterized in that** the milling in step 9 is performed using an opposite jet mill.

10. The process as claimed in one of claims 6 to 9, **characterized in that** the gel strength of the protein composition according to test A is at least 150% of the gel strength of the dried protein floc in step 8.

11. The use of the composition as claimed in one of claims 1 to 5, in a food or pharmaceutical product.

12. The use as claimed in claim 11, in which the food or pharmaceutical product has a pH of from 4 to 9, for example from 5 to 8.5, notably from 6 to 8 or about 7.

13. The use as claimed in claim 11 or 12, **characterized in that** the product is a meat or fish substitute.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1400537 A
- US 4060203 A
- FR 2889416 A1
- WO 2011124862 A1
- JP 55131351 A

**Littérature non-brevet citée dans la description**

- **BASTISTAA**. Accessing gelling ability of vegetable proteins using rheological and fluorescence techniques. *International Journal of Biological Macromolecules*, 2005, vol. 36, 135-143
- **SUN et al.** Reduction of particle size based on superfine grinding: Effects on structure, rheological and gelling properties of whey protein concentrate. *Journal of Food Engineering*, 2016, vol. 186, 69-76
- **HAYAKAWA et al.** Microparticulation by Jet Mill Griding of Protein Powders and Effects on Hydrophobicity. *Journal of Food Science*, 1993, vol. 58 (5), 1026-1029
- **LIU et al.** Ball-milling changed the physicochemical properties of SPI and its cold-set gels. *Journal of Food Engineering*, 2017, vol. 195, 158-165